# EUROPÄISCHE PATENTSCHRIFT

(11) **EP 0 975 893 B1**
(45) Veröffentlichungstag und Bekanntmachung des Hinweises auf die Patenterteilung: **16.10.2002**
(21) Anmeldenummer: 98924122.9
(22) Anmeldetag: 15.04.1998
(51) Int. Cl.: F16F 15/027, F16F 13/26

(54) **STELL- UND DÄMPFERVORRICHTUNG**
ADJUSTMENT AND DAMPING DEVICE
DISPOSITIF D'AJUSTEMENT ET D'AMORTISSEMENT

(30) Priorität: 26.04.1997 DE 19717693
(43) Veröffentlichungstag der Anmeldung: 02.02.2000
(73) Patentinhaber: Bayer Aktiengesellschaft, 51368 Leverkusen (DE); CARL SCHENCK AG, 64293 Darmstadt (DE)
(72) Erfinder: POHL, Andreas, D-64823 Gross-Umstadt (DE); ROSENFELDT, Horst, D-64846 Gross-Zimmern (DE); WENDT, Eckhardt, D-51373 Leverkusen (DE); BÜSING, Klaus, D-50676 Köln (DE)
(74) Vertreter: von Kreisler, Alek, Dipl.-Chem.
(86) Internationale Anmeldenummer: EP9802207
(87) Internationale Veröffentlichungsnummer: WO98049461

(56) Entgegenhaltungen:
- WO-A-91/15687
- WO-A-92/02107
- GB-A- 2 267 947
- US-A- 5 174 552
- US-A- 5 452 745

## Beschreibung

Die Erfindung betrifft eine steuerbare Stell- und Dämpfervorrichtung, bestehend wenigstens aus einem mit einer Hydraulikflüssigkeit gefüllten Druckraum, einem Flüssigkeitsvorrat, einer Druckraum und Flüssigkeitsvorrat verbindenden Pumpe, einem Ausgleichsvolumen und einem Rückführungskanal mit einem Durchlaßventil, bei dem als Hydraulikflüssigkeit eine elektrorheologische Flüssigkeit oder magnetorheologische Flüssigkeit verwendet wird, die auf einen in den Druckraum ragenden Kolben oder eine Membran eine Druckkraft ausübt, deren Stärke durch das Durchlaßventil gesteuert werden kann.

Die Erfindung betrifft ferner einen Energiewandler zur Umsetzung von mechanischer Schwingungsenergie in elektrische Energie.

Die Erfindung richtet sich insbesondere auf ein elektrorheologisches Stellglied zur Verbesserung der Steuerung von Kupplungen und Getrieben, vornehmlich von Viskooder Lamellenkupplungen, insbesondere zur Anwendung im Automobilbau.

Aus dem Stand der Technik sind verschiedene Kupplungsformen bekannt geworden, die unter Verwendung einer elektrorheologischen Flüssigkeit als Hydraulikflüssigkeit arbeiten (s. z.B. DE 39 22 930 und GB 2 218 758). Bei elektrorheologischen Kupplungen wird die elektrorheologische Flüssigkeit (im folgenden kurz als ERF bezeichnet) direkt zur Momentenübertragung zwischen den sich relativ zueinander bewegenden Flächen, z.B: der Kupplungsscheiben, eingesetzt. Ein großer Nachteil eines solchen Kupplungsaufbaus ist, daß zur Übertragung hoher Drehmomente sehr große Flächen benötigt werden, da die zur Verfügung stehenden elektrorheologischen Flüssigkeiten nur etwa maximal 10 kPa Schubspannung übertragen können. Für eine einfache Scheibenkupplung, die beispielsweise ein Drehmoment von nur etwa 20 Nm übertragen soll, wäre also mindestens eine kraftübertragende Fläche von 305 cm² notwendig. Die große Fläche bedingt aber ein großes Bauvolumen der Kupplung. Ein weiterer Nachteil ist die starke Erwärmung der elektrorheologischen Flüssigkeit. Diese hat eine weitere Erhöhung des Energiebedarfs zur Steuerung der Kupplung zur Folge. Aus diesem Grund sind daher bislang nur Kupplungen auf Basis elektrorheologischer Flüssigkeiten für die Übertragung kleiner Drehmomente als Prototypen entwickelt worden.

Die genannte Art von Kupplung wird speziell für den Einsatz im Automobilbau zur Abkupplung von Nebenaggregaten, z.B. für Lichtmaschine oder Lüfter, beschrieben. Das sich hier im Bereich der Kupplungsscheiben aufgrund der sich verändernden Motordrehzahl gegebenenfalls sehr hohe Differenzdrehzahlen ergeben, tritt schon im inaktiven Zustand der elektrorehologischen Flüssigkeit aufgrund ihrer Basisviskosität ein hohes Drehmoment auf. Dieses begrenzt Steuerungsmöglichkeit der Kupplung.

Aus US-A-5 452 745 ist eine steuerbare Stell- und Dämpfvorrichtung bekannt. Diese weist einen Druckraum mit Kolben sowie einen Flüssigkeitsvorrat mit einer Hydraulikflüssigkeit auf. Ferner ist eine Pumpe vorgesehen. Als Hydraulikflüssigkeit kann beispielsweise eine elektrorheologische oder magnetorheologische Flüssigkeit verwendet werden. Im Druckraum wirkt die Hydraulikflüssigkeit auf den Kolben. Ferner ist ein MRF-Ventil vorgesehen, das in einem Rückführkanal angeordnet ist und durch das der Fließwiderstand der Hydraulikflüssigkeit gesteuert werden kann. Zur Dämpfkraftregulierung sind vier MRF-Ventile vorgesehen.

Eine Aufgabe der Erfindung ist es, ein verbessertes Stellglied für Kupplungen auf Basis elektroviskoser Flüssigkeiten als Hydraulikflüssigkeit zu entwickeln, die die obengenannten Nachteile nicht aufweist. Insbesondere sollte es möglich sein, ein Stellglied bereitzustellen, das eine kontinuierliche Verstellung ermöglicht, z.B. von Lamellenkupplungen.

Stellglieder unter Verwendung von Hydraulikflüssigkeiten sind aus dem Automobilbau bekannt. Beispielsweise seien hier die sogenannten ELDRO-Geräte angeführt (Fa. EMG, AEG). Bei dieser Art von Stellglied wird ein Kolben mit Stellstange über den Druck einer Hydraulikflüssigkeit in einem bepumpten Druckraum zwischen zwei Endpositionen bewegt. Der Druck im Druckraum wird dabei durch eine Hydraulikpumpe aufrecht erhalten. Ein solches Stellglied hat den Nachteil, daß sich der Kolben nur in zwei Positionen fahren läßt und daß eine kontinuierliche Verstellung des Kolbenwegs nur mit einem hohen konstruktiven Aufwand möglich ist.

Weitere Aufgabe der Erfindung ist es, einen aktiven Dämpfer zu entwicklen, der in der Lage ist gegenphasig Stöße oder andere mechanische Schwingungen aktiv zu kompensieren.

Stoßdämpfer, die auf die Wirkung von elektrorheologischen Flüssigkeiten aufbauen, sind in der Patentliteratur vielfach beschrieben. Als Beispiel dazu wird auf das US-Patent 5 259 487 verwiesen. Bei dem dort beschriebenen Stoßdämpfer wird mittels eines Kolbens die elektrorheologische Flüssigkeit durch einen Elektrodenspalt gedrückt. Unter Nutzung des elektrorheologischen Effektes im Elektrodenspalt wird der Druckabfall und damit die Dämpferkraft stufenlos von einer niedrigen zu einem maximalen Wert verstellbar.

Mittels elektrorheologischer Stoßdämfper sind grundsätzlich semiaktive Fahrwerke realisierbar, deren Dämpfung innerhalb kurzer Zeiträume variiert werden. Die Schaltzeit beträgt z.T. weniger als 10 msec. Eine aktive Beeinflussung des Dämpferkolbens ist bei dem genannten Stoßdämpfer nicht möglich.

Weiterhin sind aus dem Stand der Technik passive Motorlager auf Basis von elektrorheologischen Flüssigkeiten als Hydraulikflüssigkeit bekannt geworden. Siehe z.B. Publikation SAE 931324 der Proceedings of the 1993 Noise and Vibration Conference, Travers City, Michigan, 10. bis 13. Mai 1993.

Bei dem gannten Lager handelt es sich um ein adaptives Lager, das zwischen verschiedenen Zuständen hin und her geschaltet werden kann. Gegenüber den aus dem Stand der Technik bekannten herkömmlichen Hydrolagern bieten diese sogenannten ERF-Lager keinen erkennbaren technischen Vorteil. Es werden derzeit vielmehr aktive Lager zum Einsatz als Motorlager gefordert, die z.B. Motorschwingungen vollständig kompensieren können, wie z.B. die zweite harmonische der Motordrehzahl bei Vierzylinder-Verbrennungsmotoren.

Ein optimal arbeitendes Motorlager muß darüber hinaus wenigstens zwei Funktionen erfüllen. Die Motor-Karosserie-Eigenfrequenzen, die durch Lastwechsel oder Anregung durch die Fahrbahn entstehen, müssen optimal gedämpft werden in einem Frequenzbereich um typischerweise etwa 12 Hz. Motorschwingungen im höherfrequenten Bereich von etwa 20 bis 100 Hz müssen optimal gegenüber dem Chassis und insbesondere der Fahrgastzelle isoliert werden. Insbesondere bei Dieselmotoren wird gefordert, daß die Schwingungen im Leerlaufbereich (Dieseltuckern) bei etwa 30 Hz unterdrückt werden.

Eine weitergehende Aufgabe der Erfindung ist es, die Dämpfungseigenschaft des Stellgliedes dahingehend zu nutzen, daß mit einem grundsäztlich gleichen. Aufbaues ermöglicht wird, mechanische Schwingungen, z.B. im Falle der Verwendung als passiver Stoßdämpfer nicht nur aufzufangen und zu tilgen, sondern gegebenenfalls in elektrische Energie umzuwandeln.

Erfindungsgemäß gelöst wird die Aufgabe durch eine steuerbare Stell- und Dämpfervorrichtung, die Gegenstand der Erfindung ist, die wenigstens aus einem Druckraum mit einem Kolben oder einer Membran, einem Flüssigkeitsvorrat mit einer Hydraulikflüssigkeit, einer Druckraum und Flüssigkeitsvorrat verbindenden Pumpe, einem Ausgleichsvolumen, einem Rückführungskanal mit einem Ventil, sowie einem umschließenden Gehäuse besteht, und dadurch gekennzeichnet ist, daß die Hydraulikflüssigkeit eine elektrorheologische Flüssigkeit oder magnetorheologische Flüsigkeit ist, die von der Pumpe vom Flüssigkeitsvorrat in den Druckraum gefördert wird und von dort über das Ventil in den Flüssigkeitsvorrat zurück oder in Gegenrichtung fließt, daß der Druck der Hydraulikflüssigkeit im Druckraum auf den Kolben oder die Membrane wirkt, und daß das Ventil als ERF- bzw. MRF-Ventil ausgeführt ist, mit dem der Durchfluß der Hydraulikflüssigkeit durch den Rückführungskanal gesteuert wird, wodurch der Druck der Hydraulikflüssigkeit auf den Kolben oder die Membran einstellbar ist.

Unter elektrorheologischen Flüssigkeiten werden Dispersionen fein verteilter hydrophiler Teilchen in hydrophoben elektrisch nicht leitenden Ölen (allgemein kolloidale Suspensionen elektrisch polarisierbarer nicht leitender Teilchen) verstanden, die unter Einfluß eines elektrischen Feldes mit hinreichend starker elektrischer Feldstärke schnell und reversibel ihre Fließgrenze bzw. ihren Schub- oder Schermodul unter Umständen über mehrere Größenordnungen ändern. Die ERF wechselt dabei gegebenenfalls vom dünnflüssigen über den plastischen bis zum festen Aggregatzustand.

Beispiele für geeignete elektrorheologische Flüssigkeiten sind in den Offenlegungsschriften DE 35 17 281A1, DE 35 36 934A1, DE 39 41 232A1, DE 40 26 881A1, DE 41 31 142A1 und DE 41 19 670A1 genannt.

Zur Anregung der elektrorheologischen Flüssigkeiten dienen sowohl elektrische Gleich- als auch Wechselspannungsfelder. Die hierbei erforderliche elektrische Leistung ist vergleichsweise gering.

Zur Steuerung des Fließverhaltens der elektrorheologischen Flüssigkeit in den Kopplungselementen kann ein Sensor benutzt werden, wie er z.B: in der Deutschen Offenlegungsschrift DE 36 09 861A1 beschrieben ist.

Unter magnetorheologischen Flüssigkeiten (MRF) versteht man Suspensionen feinverteilter magnetischer Partikel mit einer Partikelgröße von einigen µm oder einigen nm in geeigneten Flüssigkeiten wie Mineral- oder Silikonölen, wobei der Feststoffanteil der Suspension typischerweise etwa 20 bis 60 Vol-% beträgt. Magnetorheologische Flüssigkeiten verändern ihren Fließwiderstand unter Einfluß eines starken Magnetfeldes in Abhängigkeit von der Magnetfeldstärke. Sie erreichen je nach Typ Schubspannungswerte von bis zu 100 kPa.

Erfindungsgemäß wird die elektrorheologische oder magnetorheologische Flüssigkeit also nicht zu einer Momentenübertragung genutzt, sondern als Steuermedium eingesetzt. Im Falle des Einsatzes der steuerbaren Stellvorrichtung für eine Kupplung wird der Abstand zwischen den Scheibenlamellen der Kupplung über die ERF der Stellvorrichtung eindeutig gesteuert. Es läßt sich daher mit der erfindunggemäßen Vorrichtung sowohl die Abtriebsdrehzahl, wie auch das Drehmoment einer solchen Kupplung in weiten Grenzen steuern, wie dies für den bedarfsgerechten Antrieb von Nebenaggregaten, z.B. in Kraftfahrzeugen, gewünscht ist.

Der Einsatz der erfindungsgemäßen Vorrichtung als Stellglied richtet sich insbesondere auf niederfrequente Bewegungen mit einer Frequenz von kleiner oder gleich 1 Hz bei Amplituden von bevorzugt 1 bis 30 mm.

Vergleichbar einem bekannten Hydrolager besteht ein Aktivmotorlager auf Basis der Stell- und Dämpfervorrichtung gemäß der Erfindung aus einem flüssigkeitsgefüllten Raum, der auf einer Seite durch einen Hartgummikörper abgeschlossen ist. Das Pumpenelement soll einen kontinuierlichen Volumenstrom zwischen Druckraum und Flüssigkeitsvorrat ermöglichen. Die gewünschte Dämpfung wird über den Rückführungskanal bzw. das ERF- oder MRF-Ventil, das sich in dem Rückführungskanal befindet, eingestellt. Gegenüber herkömmlichen bekannten Lagern, die für einen bestimmten Motor- bzw. Wagentyp ausgelegt sind, bietet sich bei einem Lager auf Basis der erfindungsgemäßen Stell- und Dämpfervorrichtung die Möglichkeit, mit einem einzigen Lagertyp unabhängig vom einzelnen Motor- bzw. Wagentyp die Dämpfung angepaßt einzustellen. Ein weiterer Vorteil der Erfindung ist, daß die Dämpfung aktiv auf unterschiedliche Schwingungsanregung oder Lastwechsel einzustellen ist.

Der Einsatz der erfindunggemäßen Vorrichtung als aktives Lager richtet sich insbesondere auf Schwingungen mit einer Frequenz von 200 bis 100 Hz und mit einer Amplitude von 0,01 bis 0,5 mm.

Es ist insbesondere möglich, zur Tilgung von höheren mechanischen Frequenzen durch eine gegenphasige Aktivierung der elektrorheologischen Flüssigkeit bzw. der magnetorheologischen Flüssigkeit im Verhältnis zur Motorschwingung eine Schwingung der Hartgummilagerung anzuregen, die die Schwingung, z.B. des Motors, vollständig kompensiert.

Weiterer Gegenstand der Erfindung ist die Verwendung der erfindungsgemäßen Vorrichtung als aktiver Dämpfer zur Dämpfung mechanischer Schwingungen.

Hierbei wird der Druckraum der Vorrichtung so mit Druck beaufschlagt, daß einem Stoß auf die Stellstange ein Druckstoß über den Kolben entgegenwirkt. Die Beschleunigung der Stellstange kann durch im Prinzip bekannte Sensoren erfaßt werden. Das erhaltene Signal kann als Stellsignal zur Aussteuerung der ERF im Elektrodenspalt verwendet werden.

Der Einsatz der erfindungsgemäßen Vorrichtung als aktiver Dämpfer richtet sich insbesondere auf Schwingungen im Bereich von 1 bis 20 Hz bei einer Amphitude von 1 bis 30 mm.

Es wurde weiter gefunden, daß sich der Aufbau der erfindungsgemäßen Stell- und Dämpfervorrichtung dahingehend einfach variieren läßt, daß diese nicht lediglich bei der Dämpfung mechanischer Schwingungen die Schwingungsenergie in Wärme umwandelt, sondern die Schwingungsenergie durch Umwandlung in elektrische Energie nutzbar macht. Im einfachsten Fall wird in der Vorrichtung anstelle der Druckraum und Flüssigkeitsvorrat verbindenden Pumpe eine Generatoreinheit vorgesehen, die in der Lage ist, vom Kolben auf den Druckraum übertragene mechanische Schwingungen über das Antriebsrad und die Welle der Generatoreinheit dem Generator zuzuführen, durch welchen die Drehbewegung der Welle in elektrische Energie umgewandelt wird.

Gegenstand der Erfindung ist daher auch ein Energiewandler zur Umsetzung von mechanischer Schwingungsenergie in elektrische Energie gemäß Anspruch 3.

Der erfindungsgemäße Energiewandler kann auch alternativ einfach als Stell- und Dämpfervorrichtung eingesetzt werden, wenn anstelle des Generators ein Antrieb, z.B. ein Elektromotor mit der Welle der Generatoreinheit verbunden wird. -In diesem Falle wirken Antriebsrad, Welle und Motor als Pumpe für die Hydraulikflüssigkeit.

Weiterer Gegenstand ist die Verwendung des Energiewandlers der Erfindung zur Erzeugung von Strom aus niederfrequenten mechanischen Schwingungen, insbesondere mit einer Frequenz von etwa 0,5 bis 20 Hz, insbesondere bei Amplituden von 1 bis 30 mm.

Die Erfindung wird nachstehend anhand der Figuren beispielhaft näher erläutert.

In den Figuren zeigen
- Figur 1: den Querschnitt durch eine erfindungsgemäße Stell- und Dämpfervorrichtung mit einem Kolben als Kraftüberträger.
- Figur 2: den Querschnitt durch eine Ausführungsform der erfindungsgemäßen Stell- und Dämpfervorrichtung mit einer Membrane als Krafüberträger.
- Figur 3: den Querschnitt durch einen erfindungsgemäßen Energiewandler zur Umsetzung von mechanischer Schwingungsenergie in elektrische Energie.
- Figur 4: den Querschnitt durch eine Ausführungsform entsprechend Fig. 1 mit einem MRF-Ventil.

### Beispiele

### Beispiel 1

Ein Stellglied, das auf Basis einer ERF als Hydraulikflüssigkeit arbeitet und zum Einstellen einer Kupplung benutzt wird, hat den folgenden Aufbau:

Eine Stellstange 1, die den Abstand zwischen den Lamellen bzw. Scheiben einer Kupplung (nicht gezeichnet) einstellt, ist mit dem Kolben verbunden. Über eine Hydraulikpumpe 5, die hier als zweistufige Flügelzellenpumpe ausgebildet ist, wird ein drehzahl-abhängiger Volumenstrom vom Flüssigkeitsvorrat 11 in den Druckraum 4 erzeugt. Die Pumpe 5 wird über eine Keilriemenscheibe vom Keilriemen eines Verbrennungsmotors angetrieben (nicht gezeichnet). Der Druckraum 4 ist durch den Kolben 3, der mittels einer Rückstellfeder 2 eine definierte Gegenkraft erhält, abgeschlossen.

Die elektrorheologische Hydraulikflüssigkeit 6 fließt durch Rückführungskanäle 13, 13', welche ein elektrorheologisches Ventil 7 enthalten, in den Flüssigkeitsvorrat 11 zurück zur Saugseite der Pumpe 5. Das Ventil 7 ist so ausgelegt, daß der Kolben 3 und auch bei einer hohen Drehzahl der Pumpe 5, und damit verbunden bei einem hohen Volumenstrom, in seiner Grundstellung verbleibt. Das elektrorheologische Ventil 7 wird aus der elektrisch isolierten Kondensatorplatte 12 gebildet, die in dem Isolator 14 eingebettet ist, sowie dem Innengehäuse 15 als Gegenelektrode. Die Kondensatorplatte 12 ist mit der Phase einer externen Hochspannungsversorgung 9 verbunden. Alle anderen Gehäuseteile liegen auf Erdpotential.

Wird auf das elektrorheologische Ventil 7 eine Hochspannung gegeben, so wird durch das starke elektrische Feld im Rückführungskanal 13 der Fließwiderstand der ERF erhöht, so daß der Druck im Druckraum 4 ansteigt. Der Kolben 3 wird je nach dem Verhältnis der Druckkraft zur Federkraft der Rückstellfeder 2 ausgefahren und verschiebt dabei die Stellstange 1, so daß der Abstand der Scheiben bzw. der Lamellen der Kupplung stufenlos eingestellt wird. Das Ausgleichsvolumen 8 ist gasgefüllt und mit einer Membran gegenüber dem Flüssigkeitsvorrat 11 abgeschlossen und dient zum Ausgleich des Volumens der ein- oder ausfahrenden Stellstange.

### Beispiel 2

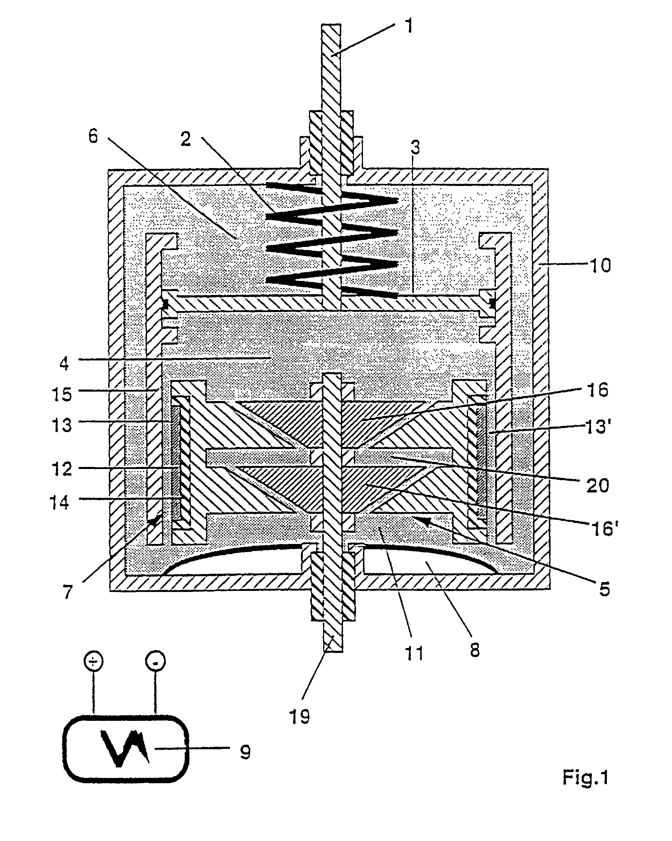

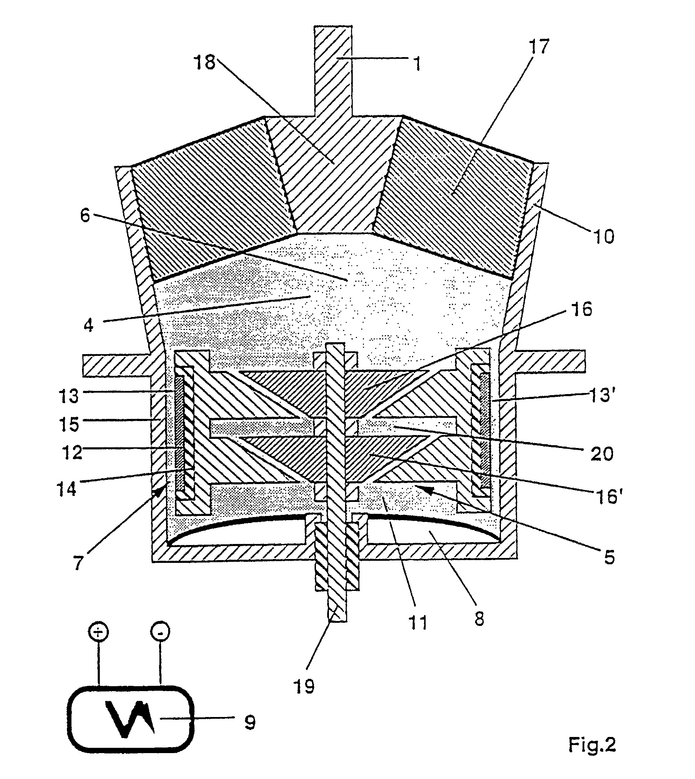

Eine Variante der unter Beispiel 1 gezeigten Stell- und Dämpfervorrichtung zur aktiven Dämpfung von Motorschwingungen von Fahrzeugen ist im Schnittbild von Figur 2 dargestellt. Der Aufbau ist in wesentlichen Teilen identisch mit dem von Figur 1. Anstelle der Kombination von Kolben 3 mit Rückstellfeder 2 ist hier zur Kraftübertragung zwischen Stellglied und z.B. einem zu bedämpfenden Motor (nicht gezeichnet) eine Gummimembran 17 vorgesehen, die über den Block 18 mit der Stellstange 1 verbunden ist. Der Motor ist direkt mit der Stellstange 1 verbunden. Das Gehäuse 15 ist mit dem in Fig. 2 nicht gezeichneten Chassis des Fahrzeugs verbunden. Wird bei dieser Vorrichtung das Ventil 7 durch Anlegen einer Spannung geschlossen, so wird der Druck in dem Druckraum 4 eine Dehnung der Membran 17 bewirken, wodurch die Stellstange 1 ausgefahren wird und einer mechanischen Schwingung aktiv entgegen wirkt. Die Dämpfung ist über das ERF-Ventil 7 an die Schwingungsfrequenz anzupassen, z.B. durch Erfassung der Schwingungen durch geeignete Sensoren und gegenphasige Ansteuerung des Ventiles 7.

### Beispiel 3

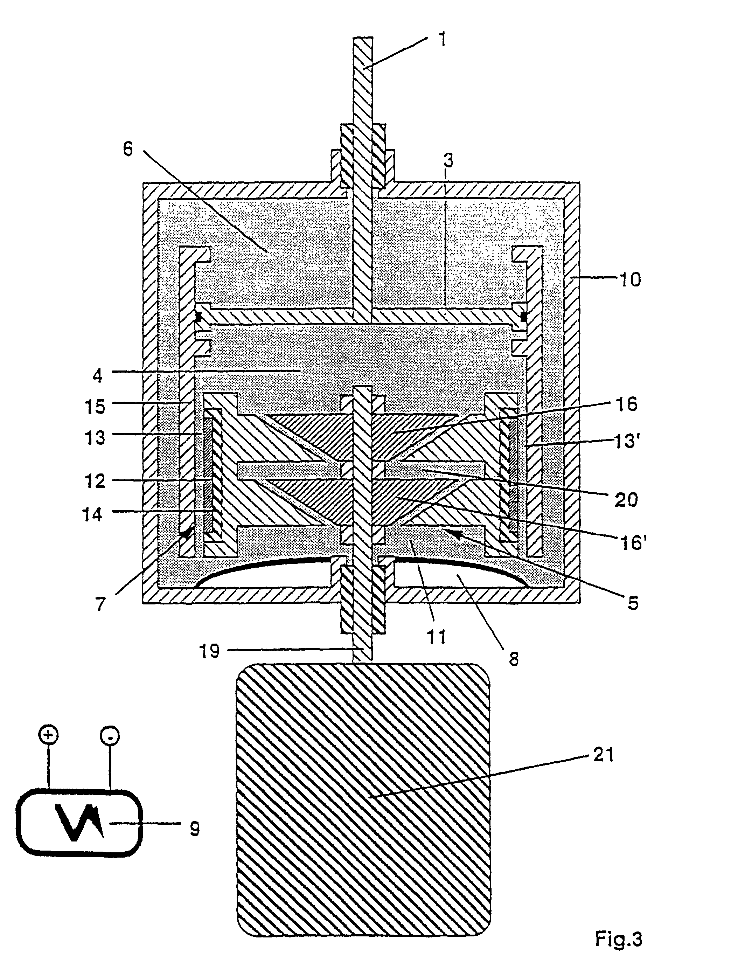

Der Aufbau gemäß Beispiel 1 wird zur Nutzung der Vorrichtung als Energiewandler entsprechend Figur 3 dahingehend verändert, daß an das Flügelrad 16 und die Welle 19 anstelle eines Motors bzw. eines Keilriemenantriebs ein Generator angeschlossen wird. Die Vorrichtung wird dann so betrieben, daß Schwingungen, die über die Stellstange 1 und den Kolben 3, die z.B. im Falle der Verwendung der Vorrichtung als Stoßdämpfer mit einem Motor verbunden sind, auf den Druckraum 4 übertragen werden. Durch Sperrung der Rückführungskanäle 13, 13' wird die Hydraulikflüssigkeit durch den Strömungskanal 20 getrieben, wobei das Flügelrad 16 angetrieben wird. Die Drehbewegung des Flügelrades 16 wird über die Welle 19 auf den Generator 21 übertragen, der daraus Strom erzeugt. Anstelle der Kombination aus Kolben 3 und Rückstellfeder 2 kann, wie in Beispiel 2 dargestellt, eine Membran 17 vorgesehen sein, die zur Kraftübertragung der mechanischen Schwingungen dient.

### Beispiel 4

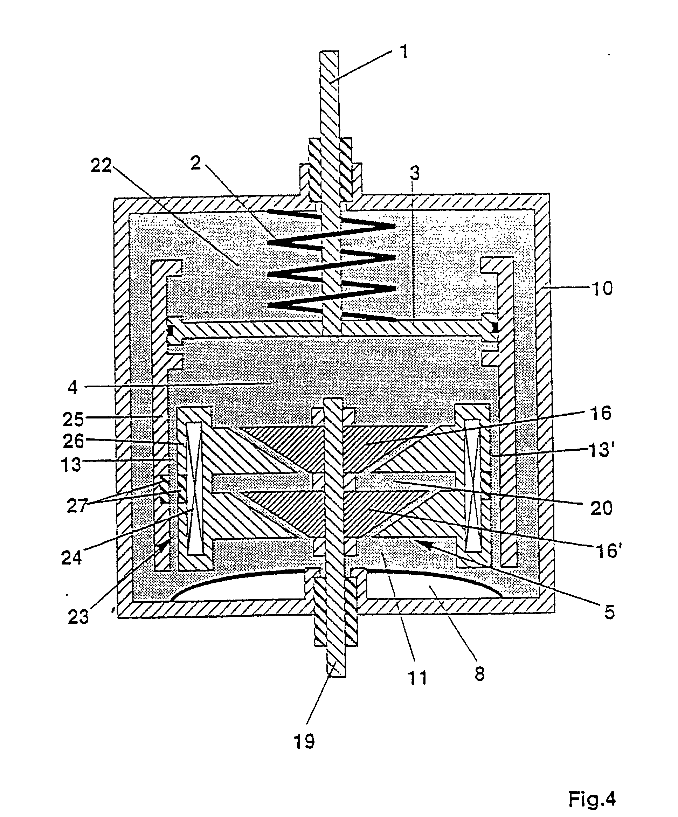

Eine Variante der erfindungsgemäßen Stell- und Dämpfervorrichtung nach Beispiel 1 ist im Schnittbild von Figur 4 gezeigt. An Stelle der ERF wird hier die MRF 22 eingesetzt. Dementsprechend wird das ERF-Ventil durch das MRF-Ventil 23 ersetzt. Der Fließwiderstand der MRF wird durch die regelbare magnetische Feldstärke in den Rückführungskanälen 13 und 13' gesteuert. Hieraus resultiert die grundsätzliche gleiche Arbeitsweise der Stell- und Dämpfervorrichtung wie nach Beispiel 1.

Das MRF-Ventil besteht aus dem Spulenkörper 24, aus den das magnetische Hoch bildenden Eisenteilen 25 und 26, aus den MRF-Rückführungskanälen 13 und 13' sowie aus den magnetischen Isolatoren 27. Durch den elektrischen Steuerstrom der Spule im Spulenkörper 24 wird ein magnetisches Feld erzeugt, das durch die Joch-bildenden Eisenteile 25 und 26 geführt wird. Hierdurch entsteht in den Rückführungskanälen 13 und 13' ein senkrecht zur Fließrichtung der MRF wirkendes, in der Magnetfeldstärke steuerbares Magnetfeld. Zur Vermeidung eines magnetischen Kurzschlusses im Joch-bildenden Eisenteil 26 und zur Erzielung eines möglichst homogenen Magnetfeldes dienen die magnetischen Isolatoren 27.

## Patentansprüche

1. Steuerbare Stell- und Dämpfervorrichtung, bestehend wenigstens aus einem Druckraum (4) mit einem Kolben (3), oder einer Membrane (17), einem Flüssigkeitsvorrat (11) mit einer Hydraulikflüssigkeit (6), einer Pumpe (5), gegebenenfalls einem Ausgleichsvolumen (8), einem Rückführungskanal (13) mit einem Ventil (7), wobei die Hydraulikflüssigkeit (6) eine elektrorheologische Flüssigkeit oder magnetorheologische Flüssigkeit ist, wobei der Druck der Hydraulikflüssigkeit (6) im Druckraum (4) auf den Kolben (3) oder die Membran (17) wirkt, und wobei das Ventil (7) als ERF- oder MRF-Ventil ausgeführt ist, mit dem der Fließwiderstand der Hydraulikflüssigkeit (6) im Rückführungskanal (13) gesteuert wird,
**gekennzeichnet durch**
ein umschließendes Gehäuse (10) und **dadurch**,
dass die Pumpe (5) den Druckraum (4) und den Flüssigkeitsvorrat (11) direkt verbindet, wobei die Hydraulikflüssigkeit über die Pumpe (5) angetrieben sowohl vom Flüssigkeitsvorrat (11) in den Druckraum (4) und von dort über das Ventil (7) in den Flüssigkeitsvorrat (11) zurück als auch in Gegenrichtung vom Druckraum (4) in den Flüssigkeitsvorrat (11) und von dort über das Ventil (7) in den Druckraum (4) zurück gepumpt wird.

2. Verwendung der Vorrichtung nach Anspruch 1 als Stellglied für Kupplungen oder als aktiver Dämpfer zur Dämpfung von mechanischen Schwingungen.

3. Energiewandler zur Umsetzung von mechanischer Schwingungsenergie in elektrische Energie, bestehend wenigstens aus einem Druckraum (4) mit einem Kolben (3) oder einer Membran (17), einem Flüssigkeitsvorrat (11) mit einer Hydraulikflüssigkeit (6), einer Druckraum (4) und Flüssigkeitsvorrat (11) direkt verbindenden Generatoreinheit (16,19,21) mit Antriebsrad (16), Strömungskanal (20), Welle (19) und Generator (21), einem Ausgleichsvolumen (8), einem Rückführungskanal (13) mit einem Ventil (7) sowie einem umschließenden Gehäuse (10), wobei die Hydraulikflüssigkeit (6) eine ERF oder MRF ist, die über die Druck- bzw. Zugkraft des Kolbens (3) oder der Membran (17) vom Druckraum (4) durch die Generatoreinheit (16,19,21) in den Flüssigkeitsvorrat (11) oder in Gegenrichtung getrieben wird, die den Strömungskanal (20) durchströmende Hydraulikflüssigkeit den Generator (21) antreibt, der Strom erzeugt, und das Ventil (7) als ERF-oder MRF-Ventil ausgeführt ist, mit dem der Fließwiderstand der Hydraulikflüssigkeit (6) im Rückführungskanal (13) gesteuert wird.

4. Verwendung des Energiewandlers gemäß Anspruch 3 zur Stromerzeugung aus niederfrequenten mechanischen Schwingungen.

5. Verwendung der Vorrichtung nach Anspruch 1 als aktives Lager insbesondere für Maschinen und Motoren.

## Claims

1. Controllable actuating and damping device comprising at least a pressure chamber (4) with a piston (3), or a diaphragm (17), a reserve of fluid (11) containing a hydraulic fluid (6), a pump (5), a compensating volume (8), if required, a return passage (13) with a valve (7), the hydraulic fluid (6) being an electrorheological fluid or magnetorheological fluid, the pressure of the hydraulic fluid (6) in the pressure chamber (4) acting on the piston (3) or the diaphragm (17), and in that the valve (7) is embodied as an ERF or MRF valve by means of which the flow resistance of the hydraulic fluid (6) in the return passage (13) is controlled,
**characterized by**
an enclosing housing (10) and in that
the pump (5) directly connects the pressure chamber (4) and the reserve offluid (11), the hydraulic fluid, driven by means ofthe pump (5), being pumped both from the reserve of fluid (11) into the pressure chamber (4) and, from there, via the valve (7) back into the reserve of fluid (11) or else in the opposite direction from the pressure chamber (4) into the reserve of fluid (11) and from there back into the pressure chamber (4) via the valve (7).

2. Use of the device according to Claim 1 as an actuator for couplings or as an active damper for damping mechanical vibrations.

3. Energy converter for converting mechanical vibration energy into electrical energy, comprising at least a pressure chamber (4) with a piston (3), or a diaphragm (17), a reserve of fluid (11) containing a hydraulic fluid (6), a generator unit (16, 19, 21) which directly connects the pressure chamber (4) and the reserve of fluid (11) with a drive gear (16), a flow passage (20), a shaft (19) and a generator (21), a compensating volume (8), a return passage (13) with a valve (7), and an enclosing housing (10), the hydraulic fluid (6) being an ERF or MRF, which is driven by the compressive or tensile force of the piston (3) or the diaphragm (17) from the pressure chamber (4), through the generator unit (16, 19, 21), into the reserve of fluid (11) or in the opposite direction, the hydraulic fluid flowing through the flow passage (20) driving the generator (21), which generates current, and the valve (7) being embodied as an ERF or MRF valve by means of which the flow resistance ofthe hydraulic fluid (6) in the return passage (13) is controlled.

4. Use of the energy converter according to Claim 3 for generating current from low-frequency mechanical vibrations.

5. Use of the device according to claim 1 as an active mount, in particular for machines and engines.

## Revendications

1. Dispositif d'ajustement et d'amortissement pouvant être commandé, se composant d'au moins une chambre de pression (4) avec un piston (3) ou un diaphragme (17), d'un réservoir de fluide (11) avec un liquide hydraulique (6), d'une pompe (5), éventuellement d'un volume d'équilibrage (8), d'un conduit de recyclage (13) avec une soupape (7), dans lequel le liquide hydraulique (6) est un liquide électrorhéologique ou un liquide magnétorhéologique, dans lequel la pression du liquide hydraulique (6) dans la chambre de pression (4) agit sur le piston (3) ou sur le diaphragme (17), et dans lequel la soupape (7) est réalisée sous la forme d'une soupape LER ou d'une soupape LMR, qui régule la résistance à l'écoulement du liquide hydraulique (6) dans le conduit de recyclage (13),
**caractérisé par**
une cage de confinement (10) et en ce que
la pompe (5) relie directement la chambre de pression (4) et le réservoir de fluide (11), dans lequel le liquide hydraulique entraîné par la pompe (5) est pompé aussi bien à partir du réservoir de fluide (11) vers la chambre de pression (4) et de là à travers la soupape (7) vers le réservoir de fluide (11) en retour, que dans la direction inverse à partir de la chambre de pression (4) vers le réservoir de fluide (11) et de là à travers la soupape (7) vers la chambre de pression (4)en retour.

2. Utilisation du dispositif selon la revendication 1 comme élément d'ajustement pour embrayage ou comme amortisseur actif pour l'amortissement de vibrations mécaniques.

3. Convertisseur d'énergie pour la conversion d'énergie vibratoire mécanique en énergie électrique, se composant d'au moins une chambre de pression (4) avec un piston (3) ou un diaphragme (17), d'un réservoir de fluide (11) avec un liquide hydraulique (6), d'une unité de générateur (16, 19, 21) munie d'une roue motrice (16), d'un conduit de circulation (20), d'un arbre (19) et d'un générateur (21) et reliant directement la chambre de pression (4) et le réservoir de fluide (11), d'un volume d'équilibrage (8), d'un conduit de recyclage (13) avec une soupape (7), ainsi que d'une cage (10) de confinement, dans lequel le liquide hydraulique est un LER ou un LMR qui, sous l'effet de la force de compression ou de la force d'entraînement du piston (3) ou du diaphragme (17) est entraîné depuis la chambre de pression (4) à travers l'unité de générateur (16, 19, 21) vers le réservoir de fluide (11) ou dans la direction inverse, le liquide hydraulique s'écoulant à travers le conduit de circulation (20) entraîne le générateur (21), lequel produit du courant, et la soupape est réalisée sous la forme d'une soupape LER ou LMR, avec laquelle la résistance à l'écoulement du liquide hydraulique (5) est régulée dans le conduit de recyclage (13).

4. Utilisation du convertisseur d'énergie selon la revendication 3 pour la production d'un courant à partir de vibrations mécaniques à basse fréquence.

5. Utilisation du dispositif selon la revendication 1 comme palier actif en particulier pour machines et moteurs.
